## Europäisches Patentamt

## European Patent Office

## Office européen des brevets

(11) Publication number: **0 045 568**
**B1**

# EUROPEAN PATENT SPECIFICATION

(45) Date of publication of patent specification: **21.08.85**

(51) Int. Cl.⁴: **B 60 J 3/02**

(21) Application number: **81303074.9**

(22) Date of filing: **06.07.81**

(54) **Sun visor.**

(30) Priority: **06.08.80 GB 8025694**

(43) Date of publication of application:
**10.02.82 Bulletin 82/06**

(45) Publication of the grant of the patent:
**21.08.85 Bulletin 85/34**

(84) Designated Contracting States:
**DE FR GB IT SE**

(56) References cited:
**DE-A-1 559 846**
**FR-A- 629 630**
**FR-A- 716 946**
**FR-A-1 479 341**
**FR-A-2 219 858**
**FR-A-2 332 150**
**FR-A-2 469 307**
**US-A-3 374 031**
**US-A-4 023 854**

(73) Proprietor: **FORD MOTOR COMPANY LIMITED**
**Eagle Way**
**Brentwood Essex CM13 3BW (GB)**
(84) **GB IT SE**

(73) Proprietor: **A Raymond, Kommanditgesellschaft**
**Postfach 2140**
**D-7850 Lorrach 1 (DE)**
(84) **DE FR GB IT SE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(72) Inventor: **Moulding, Michael Brookes**
**5 Priory Farm Road**
**Nounsley Hatfield Peverel Essex (GB)**
Inventor: **Muller, Klaus**
**Grosse Gass 13**
**D-7858 Weil-Haltingen (DE)**
Inventor: **Mack, Gerhard**
**Juchstrasse 19**
**D-7888 Rheinfelden-Adelhausen (DE)**

Courier Press, Leamington Spa, England.

(74) Representative: **Drakeford, Robert William et al**
**Ford Motor Company Limited 15/448, Research**
**& Engineering Centre Laindon**
**Basildon Essex SS15 6EE (GB)**

## Description

This invention relates to sun visors, in particular to sun visors for motor vehicles.

One known type of sun visor widely used in motor vehicles comprides a mounting bracket having a longitudinally extending shaft projecting therefrom, a visor panel mounted on the shaft for rotation about the longitudinal axis of the shaft, and a mounting clip connected to the visor panel for rotation therewith and including a spring leaf which exerts a radial force on the shaft. The spring leaf resists rotation of the visor panel so that the visor panel can be arranged at a desired angle relative to the shaft. A flat portion is frequently provided on the shaft so that the spring leaf positively retains the visor panel in a position corresponding to that which the panel occupies in a vehicle when not in use. A sun visor having a construction of this type is for example disclosed in British Patent Specification No. 1534282.

In order to prevent the visor panel from moving axially relative to the shaft, it has been necessary to provide a further clip which has added to the cost of the part and has increased the complexity of its construction.

According to the present invention there is provided a sun visor comprising a mounting bracket having a longitudinally extending shaft projecting therefrom, a visor panel mounted on the shaft for rotation about the longitudinal axis of the shaft, and a mounting clip formed as a one-piece pressing and connected to a mounting element on the visor panel for rotation therewith, the mounting clip including a spring leaf which exerts a radial force on the shaft and which resists rotation of the visor panel on the shaft, the mounting element being rotatably mounted on the shaft at two longitudinally spaced positions on opposite sides of the clip characterised in that the spring leaf and the shaft include complementary inter-engaging radial formations which engage each other to resist axial movement of the visor panel along the shaft, the clip includes two longitudinally spaced flanges having an aperture through which the shaft passes, each flange has two arms, and mounting element is gripped between the two arms of each flange.

The formations on the shaft and spring leaf thus enable the clip to perform the function of resisting both radial and axial movement of the visor panel relative to the shaft, thereby reducing the number of components in the sun visor, and facilitating its assembly.

Preferably, the formations comprise a groove and a ridge. This is most conveniently achieved by forming the groove circumferentially on the shaft, and forming the ridge in the spring leaf, for example in a pressing operation. For simplicity, the clip is preferably formed as a one-piece pressing.

A preferred embodiment of the invention will now be described, by way of example only, with reference to the accompanying drawings, in which:—

Figure 1 is an elevation of part of a sun visor in accordance with the invention;

Figure 2 is a similar view of a clip forming part of the sun visor of Figure 1;

Figure 3 is an end view of the clip of Figure 2;

Figure 4 is a side view, on a reduced scale, of a shaft forming part of the sun visor of Figure 1; and

Figure 5 is a cross-section, taken along line V—V of Figure 3.

Referring to the drawings, a sun visor comprises a visor panel 1 of conventional construction which includes a peripheral wire frame 2 the ends of which are secured to a mounting block 3 of which may be a block of moulded plastics material (as shown or a metal pressing. The block 3 includes two aligned sleeve portions 4, 5 through which a longitudinally extending shaft 6 of a mounting bracket 7 extend and which allow the visor panel 1 to rotate about the longitudinal axis 8 of the shaft 6. A mounting clip 10 positioned between the two sleeve portions 4, 5 also connects the visor panel to the shaft 6.

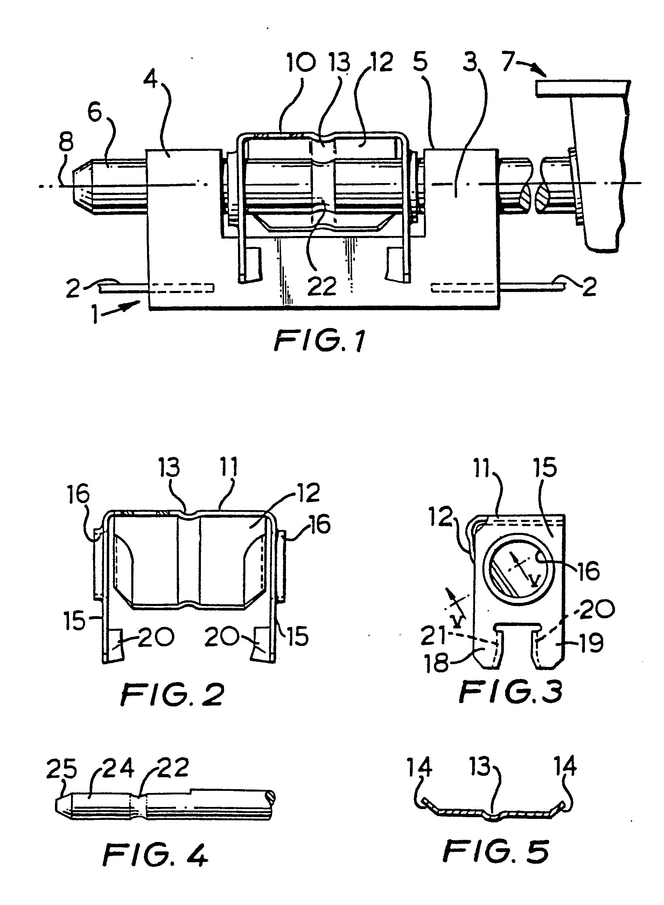

Referring to Figures 2 and 3, the clip 10 comprises an integral pressing of spring steel and has a longitudinally extending back plate 11 one side of which is bent over to form a spring leaf 12. The inside surfaces of the back plate 11 and the leaf spring 12 are formed with a continuous transverse ridge 13. The side edges 14 of the leaf spring 12 are swept back, as illustrated in Figure 5.

The back plate 11 has two longitudinally spaced end flanges 15, 15. Each flange includes an aperture 16, large enough to receive the shaft 6 and two transversely spaced arms 18, 19. Each arm 18, 19 has a flange 20, 21 on its inner side which extends in the longitudinal direction. As seen in Figure 3, the spring leaf 12 overlies the aperture 16, 16 and therefore engages the shaft 6 when the shaft is passed therethrough. Referring to Figure 4, the shaft 6 has a circumferential groove 22 complementary in shape to the ridge 13, and a longitudinal extending flat portion 24 at one end. The terminal end 25 of the shaft 6 is tapered.

In order to assemble the sun visor, the clip 10 is connected to the block 3 by pushing the end flanges 15, 15 on to the block 3 so that the block 3 becomes firmly gripped between the inturned flanges 20, 21 on the inner sides of the arms 18, 19, and so that the apertures 16, 16 in the end flanges 15, 15 are aligned coaxially with the sleeve portions 4, 5 of the block 3. The shaft 6 is then pushed through the sleeve portions 4, 5, the apertures 16, 16 thus deflecting the spring leaf 12 radially outwardly until the transverse ridge 13 in the spring leaf 12 of the clip 10 engages in the groove 22 in the shaft 6. The insertion of the shaft 6 into the clip 10 is facilitated by its tapered end 25 and the inclined edges 14 of the spring leaf 12.

The engagement of the groove 22 and the ridge 13 resists further axial movement of the visor panel along the shaft 6 in either direction. The radial force exerted on the shaft 6 by the spring leaf 12 resists rotation of the visor panel on the shaft, and the engagement of the spring leaf 12 with the flat portion positively retains the panel in one rotational position relative to the shaft 6, corresponding to the position which the visor panel occupies when installed in a vehicle and not in use.

**Claims**

1. A sun visor comprising a mounting bracket (7) having a longitudinally extending shaft (6) projecting therefrom, a visor panel (1) mounted on the shaft (6) for rotation about the longitudinal axis of the shaft, and a mounting clip (10) formed as a one-piece pressing and connected to a mounting element (3) on the visor panel for rotation therewith, the mounting clip (10) including a spring leaf (12) which exerts a radial force on the shaft (6) and which resists rotation of the visor panel on the shaft, the mounting element (3) being rotatably mounted on the shaft (6) at two longitudinally spaced positions on opposite sides of the clip (10), characterised in that the spring leaf (12) and the shaft (6) include complementary inter-engaging radial formations (13, 22) which engage each other to resist axial movement of the visor panel along the shaft, the clip (10) includes two longitudinally spaced flanges (15, 15) having an aperture (16, 16) through which the shaft (6) passes. Each flange (15, 15) has two arms (18, 19), and the mounting element (3) is gripped between the two arms of each flange.

2. A sun visor according to Claim 1 wherein the said formations comprise a groove (22) and a ridge (13).

3. A sun visor according to Claim 2 wherein the shaft (6) includes a circumferential groove (22), and the spring leaf includes a ridge (13).

**Patentansprüche**

1. Eine Sonnenblende, bestehend aus einer Befestigungskonsole (7) mit einer davon abgehenden, längsverlaufenden Welle (6), einem auf der Welle (6) montierten Blendenkörper (1) zwecks Drehung um die Längsachse der Welle, und einer als einteiliges Preßstück hergestellten Montageklammer (10), die mit dem Montageelement (3) an der Sonnenblende zwecks gemeinsamer Drehbewegung verbunden ist, wobei die Montageklammer (10) ein Federblatt (12) umfaßt, das eine Radialkraft auf die Welle (6) ausübt und der Drehbewegung des Blendenkörpers auf der Welle entgegenwirkt, und das Montageelement (3) in Längsrichtung an zwei voneinander entfernten Stellen auf gegenüberliegenden Seiten der Klammer (10) drehbar auf der Welle (6) montiert ist, dadurch gekennzeichnet, daß das Federblatt (12) und die Welle (6) sich ergänzende, ineinander eingreifende, radial verlaufende Ausbildungen (13, 22) umfassen, die ineinander eingreifen, um der Achsialbewegung des Blendkörpers entlang der Welle entgegenzuwirken, wobei die Klammer (10) in Längsrichtung zwei mit Abstand zueinander angeordnete. Flansche (15, 15) mit einer Öffnung (16, 16) umfaßt, durch die die Welle (6) verläuft, jeder Flansch (15, 15) zwei Arme (18, 19) aufweist und das Montageelement (3) zwischen den beiden armen eines jeden Flansches verspannt ist.

2. Eine Sonnenblende gemäß Anspruch 1, wobei die genannten Ausbildungen eine Nut (22) und eine Rippe (13) umfassen.

3. Eine Sonnenblende gemäß Anspruch 2, wobei die Welle (6) eine Umfangsnut (22) aufweist und das Federblatt eine Rippe (13) umfaßt.

**Revendications**

1. Un pare-soleil comprenant une console de montage (7) de laquelle sort un axe (6) s'étendant longitudinalement, un panneau écran (1) monté sur l'axe (6) et pouvant tourner autour de cet axe, et une griffe de montage (10) formée en une pièce par pressage et reliée à un élément de montage (3) sur le panneau écran afin de pouvoir tourner avec celui-ci, la griffe de montage (10) comportant une lame de ressort (12) qui exerce un effort radial sur l'axe (6) et qui s'oppose à la rotation du panneau écran sur l'axe, l'élément de montage (3) étant monté à rotation sur l'axe (6) en deux positions, espacées en direction longitudinale, situées sur les côtés opposés de la griffe (10), caractérisé en ce que la lame de ressort (12) et l'axe (6) présentent des profils complémentaires (13, 22) correspondants, qui s'engagent l'un dans l'autre pour s'opposer à un déplacement axial du panneau écran le long de l'axe, en ce que la griffe (10) comporte deux brides (15, 15), espacées en direction longitudinale et présentant une ouverture (16, 16) à travers laquelle passe l'axe (6), en ce que chaque bride (15, 15) présente deux pattes (18, 19) et en ce que l'élément de montage (3) est pincé entre les deux pattes de chaque bride.

2. Un pare-soleil suivant la revendication 1, dans lequel les dits profils comprennent une gorge (22) et une saillie (13).

3. Un pare-soleil suivant la revendication 2, dans lequel l'axe (6) présente une gorge circonférentielle (22) et la lame de ressort une saillie (13).

0 045 568

FIG.1

FIG.2

FIG.3

FIG.4

FIG.5

1